# EUROPEAN PATENT APPLICATION

(11) **EP 1 414 229 A2**
(43) Date of publication of application: **28.04.2004**
(21) Application number: 03023909.9
(22) Date of filing: 21.10.2003
(51) Int. Cl.: H04M 15/00, H04Q 7/38, G06F 17/60

(54) **Charging system, charging method, and data-recording medium on which a charging control program is recorded**

(30) Priority: 22.10.2002 JP 2002307566
(71) Applicant: Pioneer Corporation, Tokyo-to (JP)
(72) Inventor: Arakawa, Takeharu, Yamada Kawagoe-shi Saitama-ken (JP)
(74) Representative: Grünecker, Kinkeldey, Stockmair & Schwanhäusser Anwaltssozietät

(57) **Abstract**

There is provided a charging system or the like which makes it possible to reduce financial and procedural burden on a purchaser of a terminal apparatus and to also reduce procedural burden on a communication carrier. A network system N is that a communication apparatus C owned by the communication carrier, an attached terminal T of a communication type car-navigation apparatus, and a processing apparatus H owned by a seller of the communication type car-navigation apparatus are connected via a wired or wireless line L. In the network system N, a fee calculation server in the communication apparatus C calculates a fee generated by the attached terminal T performing communication via the communication apparatus C. And a charging server in the communication apparatus C performs processing for charging the calculated fee to thereby charge the seller the fee.

## Description

### BACKGROUND OF THE INVENTION

### 1. Field of the Invention

The present invention relates to a technical field of a charging system, a charging method, and a data-recording medium on which a charging control program is recorded.

### 2. Description of the Related Art

Conventionally, a terminal apparatus such as a cellular phone is sold to a communication carrier from a manufacturer of the terminal apparatus. The terminal apparatus is further sold to a user through an agency of the communication carrier, a home appliance store, or the like.

A user who uses such a terminal apparatus to perform communication purchases the terminal apparatus from the communication carrier. And the user pays the communication carrier for the terminal apparatus first. Thereafter, the user of the terminal apparatus is charged a fee (communication fee) for using the terminal apparatus for executing communication and acquiring information by the communication carrier. Then the user pays the communication carrier the communication fee.

In addition, information acquired from a communication apparatus owned by the communication carrier may be acquired again with the same contents by such a terminal apparatus as the user of the terminal apparatus desires update or the like of the information even if the information has already been acquired.

In general, the communication carrier has to take procedures such as charging a user of each terminal apparatus a communication fee for using the terminal apparatus for execution of communication and acquisition of information individually. And the communication carrier has to receive the communication fee. The communication carrier has burden due to such respective procedures.

Further, in the case where information which is the same as already acquired information is sent from the communication apparatus to the terminal apparatus again, a communication fee is incurred every time the information is acquired. In this way, the user of the terminal apparatus is charged duplicated communication fees. As a result, the user bears a larger communication fee despite the fact that the user is not benefited at all.

### SUMMARY OF THE INVENTION

Thus, as an example, it is an object of the present invention to solve the above-described inconvenience and to provide a charging system, a charging method, and a data-recording medium on which a charging control program is recorded, which reduce financial and procedural burdens on a purchaser of a terminal apparatus and also reduce procedural burden on a communication carrier.

The above object of the present invention can be achieved by a charging system of the present invention. The charging system for charging a fee generated by communication in a network system comprising a communication apparatus, a terminal apparatus which performs communication via the communication apparatus, and a seller's apparatus belonging to a seller which has sold the terminal apparatus, the charging system comprising: a calculation device which calculates the fee, and a charging processing device which performs processing for charging the seller the calculated fee.

According to the present invention, the seller of the terminal apparatus is charged all the fees generated by communication. Therefore, procedural burden on the communication carrier, which charges users of respective terminal apparatus fees, is reduced. And procedural burden on the user of the terminal apparatus who pays fees generated by communication is reduced.

In one aspect of the present invention, the charging system is further provided with: a restricting device which restricts generation of the fee based upon conditions set in advance.

According to the present invention, moreover, since generation of a fee due to communication is controlled based upon conditions set in advance, financial burden on the seller of the terminal apparatus is reduced.

In another aspect of the present invention, in a case where the communication apparatus and the terminal apparatus perform the communication for transmission of information, and wherein the restricting device prohibits transmitting information identical with the information being transmitted to the terminal apparatus.

According to the present invention, it is possible to prohibit information identical with already acquired information from being transmitted to the terminal apparatus again. And generation of a fee due to communication is controlled. Therefore, in the case where information identical with already acquired information is transmitted to the terminal apparatus again, waste of charging a communication fee for the duplicated information is prevented. In this way, since generation of a fee due to communication is controlled based upon conditions set in advance, financial burden on the seller of the terminal apparatus is reduced.

In further aspect of the present invention, the charging system is further provided with: an expiration date information adding device which adds expiration data information, which indicates an expiration date of the information to be transmitted, to the information and transmits the information with expiration data information to the terminal apparatus, wherein the restricting device comprises: a first comparing device which compares the expiration date indicated by the transmitted expiration date information and a present time; and a first prohibiting device which prohibits execution of the communication when time corresponding to the expiration date is later than the present time.

According to the present invention, when the time corresponding to the expiration date is later than the present time, execution of communication can be prohibited. Therefore, in the case where information which is updated for each fixed period is acquired, communication can be prohibited while this information to be updated is not updated. By restricting communication in this way, generation of a communication fee can be restricted. In this way, since generation of a fee due to communication is controlled based upon conditions set in advance, financial burden on the seller of the terminal apparatus is reduced.

In further aspect of the present invention, the charging system is further provided with: a regional information adding device which adds regional information, which indicates a valid region of the information to be transmitted, to the information and transmits the information with regional information to the terminal apparatus, wherein the restricting device comprises: a second comparing device which compares a valid region indicated by the transmitted regional information and a present position of the terminal apparatus; and a second prohibiting device which prohibits execution of the communication when the present position is within the valid region.

According to the present invention, when the present position is within the valid region, execution of communication can be prohibited. Therefore, communication can be prohibited unless the terminal apparatus has moved a predetermined distance after one communication. By controlling communication in this way, generation of a communication fee can be controlled. In this way, since generation of a fee due to communication is controlled based upon conditions set in advance, financial burden on the seller of the terminal apparatus is reduced.

In further aspect of the present invention, the charging system is further provided with: the seller's apparatus comprises a payment acceptance device which performs processing for accepting payment of a fixed amount of fee set in advance from a purchaser of the terminal apparatus.

According to the present invention, in whatever way information is exchanged and communication is performed between the terminal apparatus and the communication apparatus, an amount which the seller of the terminal apparatus receives from the purchaser of the terminal apparatus is constant. Therefore, financial burden on the purchaser of the terminal apparatus is reduced. Further, since a fixed amount is paid to the seller of the terminal apparatus in addition to the price of the terminal apparatus, financial burden on the seller is also reduced.

In further aspect of the present invention, the charging system is further provided with: the communication apparatus further comprises a relay transmission device which transmits the information, which is sent from one and more of information transmission apparatuses, to the terminal apparatus.

According to the present invention, since information sent from the plurality of information transmission apparatuses is transmitted to the terminal apparatus, the user of the terminal apparatus can acquire various kinds of information. This is convenient for the user of the terminal apparatus.

In further aspect of the present invention, the charging system is further provided with: at least one of the communication apparatus, the terminal apparatus, and the seller's apparatus provide at least one of the calculation device and the charging device.

According to the present invention, the seller of the terminal apparatus is charged all the fees generated by communication. Therefore, procedural burden on the communication carrier, which charges users of respective terminal apparatus fees, is reduced. And procedural burden on the user of the terminal apparatus who pays fees generated by communication is reduced.

The above object of the present invention can be achieved by a communication apparatus of the present invention. The communication apparatus included in a charging system for charging a fee generated by communication in a network system comprising a communication apparatus, a terminal apparatus which performs communication via the communication apparatus, and a seller's apparatus belonging to a seller which has sold the terminal apparatus, the communication apparatus comprising: a calculation device which calculates the fee, and a charging processing device which performs processing for charging the seller the calculated fee.

According to the present invention, since the communication apparatus includes the calculation device and the charging processing device, the seller of the terminal apparatus is charged all fees generated by communication. Therefore, procedural burden on the communication carrier, which charges users of respective terminal apparatus fees, is reduced. And procedural burden on the user of the terminal apparatus who pays fees generated. by communication is reduced.

The above object of the present invention can be achieved by a terminal apparatus of the present invention. The terminal apparatus included in a charging system for charging a fee generated by communication in a network system comprising a communication apparatus, a terminal apparatus which performs communication via the communication apparatus, and a seller's apparatus belonging to a seller which has sold the terminal apparatus, the terminal apparatus comprises a restricting device which restricts generation of the fee based upon conditions set in advance.

According to the present invention, since generation of a fee due to communication is controlled based upon conditions set in advance, financial burden on the seller of the terminal apparatus is reduced.

The above object of the present invention can be achieved by a seller's apparatus of the present invention. The seller's apparatus included in a charging system for charging a fee generated by communication in a network system comprising a communication apparatus, a terminal apparatus which performs communication via the communication apparatus, and the seller's apparatus belonging to a seller which has sold the terminal apparatus, the seller's apparatus comprises the payment acceptance device which performs processing for accepting payment of a fixed amount of fee set in advance from a purchaser of the terminal apparatus.

According to the present invention, in whatever way information is exchanged and communication is performed between the terminal apparatus and the communication apparatus, an amount which the seller of the terminal apparatus receives from the purchaser of the terminal apparatus is constant. Therefore, financial burden on the purchaser of the terminal apparatus is reduced. Further, since a fixed amount is paid to the seller of the terminal apparatus in addition to the price of the terminal apparatus, financial burden on the seller is also reduced.

The above object of the present invention can be achieved by a charging method of the present invention. The charging method for charging a fee generated by communication in a network system comprising a communication apparatus, a terminal apparatus which performs communication via the communication apparatus, and a seller's apparatus belonging to a seller which has sold the terminal apparatus, the charging method comprising: a calculation process which calculates the fee; and a charging processing process which performs processing for charging the seller the calculated fee.

According to the present invention, the. seller of the terminal apparatus is charged all the fees generated by communication. Therefore, procedural burden on the communication carrier, which charges users of respective terminal apparatus fees, is reduced. And procedural burden on the user of the terminal apparatus who pays fees generated by communication is reduced.

The above object of the present invention can be achieved by a data-recording medium of the present invention. The data-recording medium having recorded therein the charging control program so as to be readable by a computer, the computer included in a charging system for charging a fee generated by communication in a network system comprising a communication apparatus, a terminal apparatus which performs communication via the communication apparatus, and a seller's apparatus belonging to a seller which has sold the terminal apparatus, the charging control program causing the computer to function as: a calculation device which calculates the fee; and a charging processing device which performs processing for charging the seller the calculated fee.

According to the present invention, the computer included in the charging system functions so as to calculate a fee and perform processing for charging the seller of the terminal apparatus the calculated fee. Therefore, the seller of the terminal apparatus is charged all fees generated by communication. Therefore, procedural burden on the communication carrier, which charges users of respective terminal apparatus fees, is reduced. And procedural burden on the user of the terminal apparatus who pays fees generated by communication is reduced.

### BRIEF DESCRIPTION OF THE DRAWINGS

In the accompanying drawings:
FIG. 1 is a block diagram showing a schematic structure of a network system in accordance with a first embodiment;
FIG. 2 is a block diagram showing a detailed structure of an attached terminal of a communication type car-navigation apparatus which is a component constituting the network system;
FIG. 3 is a block diagram showing a detailed structure of a communication apparatus which is a component constituting the network system;
FIG. 4 is a block diagram showing a detailed structure of a processing apparatus which is a component constituting the network system;
FIG. 5 is a flow diagram showing a flow of information in the network system;
FIG. 6 is a flow diagram showing an example of processing for restricting communication according to expiration date information in accordance with a second embodiment;
FIG. 7 is a flow diagram showing another example of the processing for restricting communication according to valid region information in accordance with the second embodiment; and
FIG. 8 is a block diagram showing a detailed structure of a communication apparatus which is a component constituting a network system in accordance with a third embodiment.

### DESCRIPTION OF THE PREFERRED EMBODIMENTS

Next, preferred embodiments of the present invention will be described with reference to the accompanying drawings.

The embodiments described below are embodiments is in a network system including a communication apparatus owned by a communication carrier, an attached terminal of a communication type car-navigation apparatus for personal serving as terminal apparatus use for performing communication via the communication apparatus, and a processing apparatus serving as seller's apparatus owned by a seller who has sold the communication type car-navigation apparatus. The present invention is applied to a charging system in charging a fee, which is generated by communication between the communication apparatus and the attached terminal of the communication type car-navigation apparatus.

### (I) First embodiment

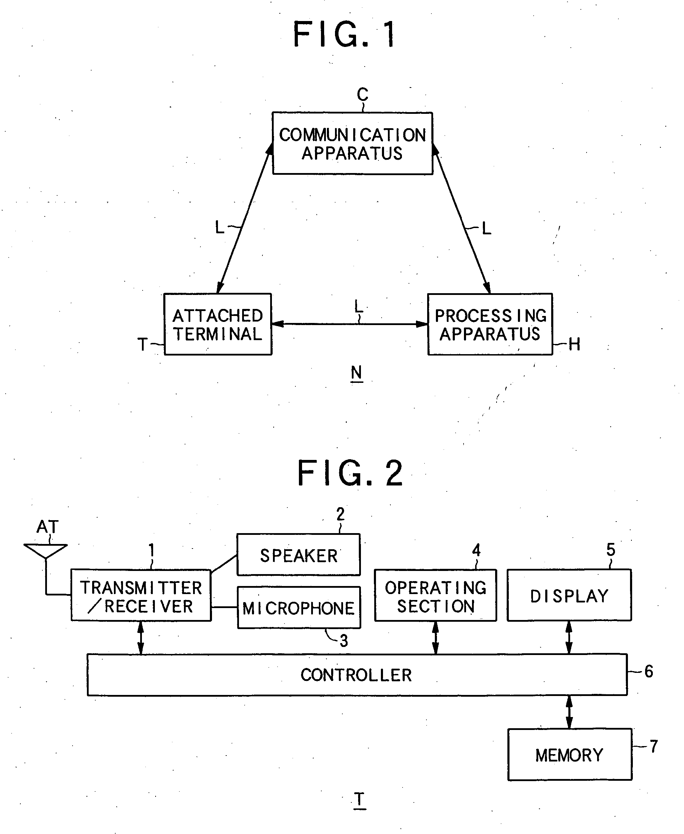

First, a first embodiment in accordance with the present invention will be described with reference to FIGS. 1 to 5.

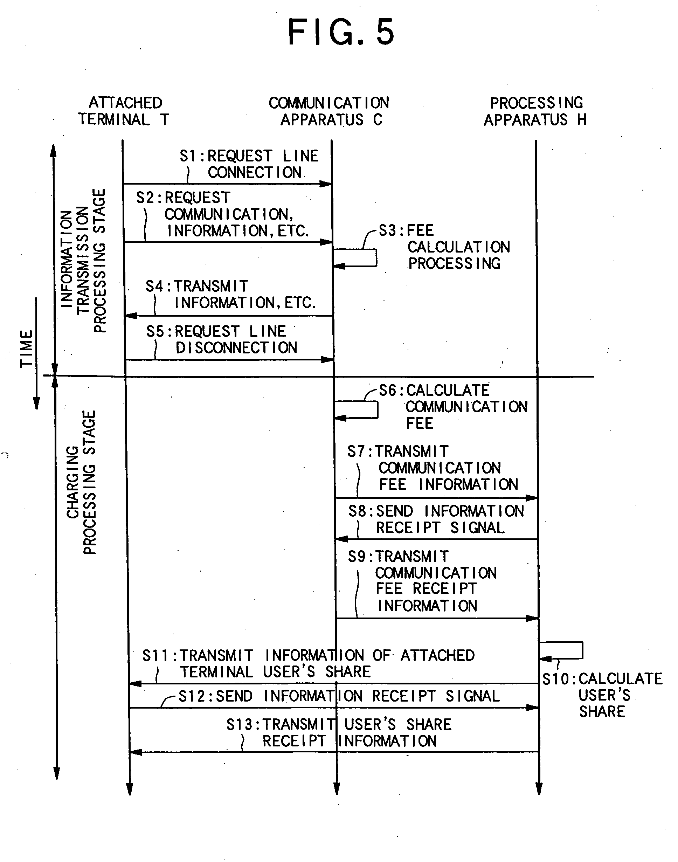

Note that FIG. 1 is a block diagram showing a schematic structure of a network system in accordance with the first embodiment. FIGS. 2 to 4 are block diagrams showing a detailed structure for each component constituting the network system, respectively. FIG. 5 is a flow diagram showing a flow of information in the network system.

As shown in FIG. 1, a network system N in accordance with the first embodiment includes an attached terminal T of a communication type car-navigation apparatus for personal use (hereinafter simply referred to as attached terminal T), a communication apparatus C, and a processing apparatus H. The communication apparatus C is connected to the attached terminal T via the network system N to thereby exchange various data with the attached terminal T. And the communication apparatus C also performs processing for calculating a communication fee and processing for charging a seller of the communication type car-navigation apparatus the calculated fee. The communication apparatus C is installed in a so-called service provider of a communication carrier. The processing apparatus H is connected to each of the attached terminal T and the communication apparatus C via the network system N to thereby perform processing for receiving payment of a predetermined fee from a purchaser of the attached terminal T. Further, the processing apparatus H is owned by the seller of the communication type car-navigation apparatus. The respective components are connected by a line L.

Note that, in the following description, a purchaser and a user of the communication type car-navigation apparatus may be simply referred to as a user. In addition, the seller of the communication type car-navigation apparatus may be simply referred to as a seller.

Next, a detailed structure of each component will be described.

First, a detailed structure of the attached terminal T will be described with reference to FIG. 2.

As shown in FIG. 2, the attached terminal T of the first embodiment includes an antenna AT, a transmitter / receiver 1, a speaker 2, a microphone 3, an operating section 4, a display 5, a controller 6, and a memory 7.

Next, operations will be described.

First, information sent from the communication apparatus C by wireless communication via the communication line L, which is established between a line transmitter / receiver 11 of the communication apparatus C described later and the transmitter / receiver 1, is inputted to the transmitter / receiver 1 via the antenna AT.

Then, the transmitter / receiver 1 subjects the inputted information to reception processing such as demodulation processing set in advance. In addition, the transmitter / receiver 1 outputs sound information in the received information to the speaker 2. Further, the transmitter / receiver 1 outputs image information in the received information to the display 5 via the controller 6.

On the other hand, the sound (including voice) inputted via the microphone 3 is subjected to transmission processing such as modulation processing set in advance in the transmitter / receiver 1. And the sound is outputted to the communication apparatus C via the antenna AT and the line L.

In addition, an operation necessary for performing the above-described transmission and reception of information is executed by the user in the operating section 4. An operation signal corresponding to the executed operation is outputted to the controller 6 from the operating section 4.

In this way, the controller 6 unitarily processes the transmission and reception processing of sound information and image information. Note that information necessary for the processing is stored in a memory 7 temporarily if necessary. And the information is read out. And the information is supplied for the processing. In addition, information which should be notified to the user in performing the processing is displayed on the display 5.

In parallel with the above-mentioned processing, based upon information exchanged between the controller 6 and the communication apparatus C as described later, the controller 6 executes various kinds of information processing corresponding to the information. In this case, temporary storage of information in the memory 7 is also performed in parallel with the processing. Moreover, in execution of the information processing, necessary information is inputted by the user in the operating section 4. In addition, the necessary information is also displayed on the display 5.

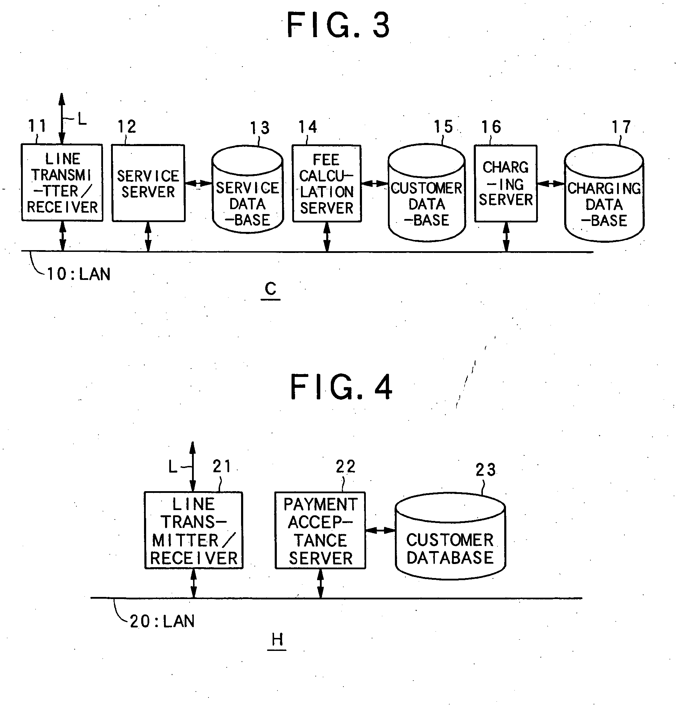

Next, a detailed structure of the communication apparatus C owned by the communication carrier will be described with reference to FIG. 3.

As shown in FIG. 3, the communication apparatus C of the first embodiment is installed in a facility owned by the communication carrier. More specifically, the communication apparatus C includes the line transmitter / receiver 11 which is connected to the line L, a service server 12, a service database 13, a fee calculation server 14 serving as a calculation device, a customer database 15, a charging server 16 serving as a charging processing device, a charging database 17, and a LAN (Local Area Network) 10.

Next, operations will be described.

Upon receiving the information, which should be sent via the line L, via the LAN 10, the line transmitter / receiver 11 subjects this information to the transmission processing including modulation processing and the like set in advance, and transmits the information after the transmission processing onto the line L. On the other hand, upon receiving the information, which should be received via the line L, from the line L, the line transmitter / receiver 11 subjects this information to the reception processing including demodulation processing and the like set in advance, and transmits the information after the reception processing to a component requiring the information via the LAN 10.

The service database 13 stores various kinds of information to be supplied to the attached terminal T and outputs the information to the service server 12 in response to a request from the service server 12.

Then, the service server 12 acquires information necessary for supplying the various kinds of information to the attached terminal T from the service database 13 and executes communication with the attached terminal T. Thereby the service server 12 exchanges the various kinds of information. Moreover, the service server 12 transmits information necessary for fee calculation such as an amount of the communication executed and the information exchanged between the service server 12 and the attached terminal T as described above, time required for the communication and the like, and a user ID of the attached terminal T which has performed such communication to the fee calculation server 14 via the LAN 10.

Based upon the information necessary for fee calculation, the fee calculation server 14 collates the information with customer information necessary for the calculation processing which is outputted from the customer database 15. And the fee calculation server 14 performs calculation processing for calculating a communication fee for the communication. Moreover, the fee calculation server 14 transmits information on the calculated communication fee and the user of the attached terminal T who performed this communication to the charging server 16 via the LAN 10.

The customer database 15 stores information necessary for the calculation processing (more specifically, for example, individual information such as a name and an address of a user). The customer database 15 outputs the information to the fee calculation server 14 such that the information is served for the calculation processing.

The charging server 16 outputs the information for charging the seller the communication fee, which includes the information on both the communication fee and the user, to the charging database 17 and causes it to store the information. Moreover, based upon the information, the charging server 16 collates the information with the information, which is outputted from the charging database 17, for charging the seller the communication fee. Then, the charging server 16 performs charging processing described later for charging the communication fee. Then, the charging server 16 transmits the information on an amount, which the seller is charged by the charging processing, to the line transmitter / receiver 11 via the LAN 10. Note that, the information is sent to the processing apparatus H via the line L.

The charging database 17 stores the information, which is inputted from the charging server 16, for charging the seller the communication fee. In addition, the charging database 17 outputs the information on the amount which the seller is charged to the charging server 16 in response to a request from the charging server 16.

Next, a detailed structure of the processing apparatus H will be described with reference to FIG. 4.

As shown in FIG. 4, the processing apparatus H is installed in a facility owned by the seller of the communication type car-navigation apparatus. More specifically, the processing apparatus H includes a line transmitter / receiver 21 connected to the line L, a payment acceptance server 22 serving as a payment acceptance device, a customer database 23, and a LAN 20.

Next, operations will be described.

Upon receiving information which should be sent via the line L, from the LAN 20, the line transmitter / receiver 21 subjects this information to transmission processing including modulation processing and the like set in advance, and transmits the information after the transmission processing onto the line L. On the other hand, upon receiving the information, which should be received via the line L, from the line L, the line transmitter / receiver 21 subjects this information to reception processing including demodulation processing and the like set in advance, and transmits the information after the reception processing to a component requiring the information via the LAN 20. In particular, the line transmitter / receiver 21 detects charging information exchanged over the line L. Then, the line transmitter / receiver 21 outputs the detected charging information to the payment acceptance server 22 via the LAN 20.

Consequently, the payment acceptance server 22 exchanges necessary information with the customer database 23. And then the payment acceptance server 22 performs payment acceptance processing described later.

Moreover, the customer database 23 stores information necessary for the charging processing and information on a form of fee payment of the user of the attached terminal T necessary to the payment acceptance processing. The information necessary for the charging processing is the same as the information stored in the customer database 15 provided in the communication apparatus C. The customer database 23 outputs the information to the payment acceptance server 22 such that the information is served for the payment acceptance processing.

Next, the charging processing in accordance with the first embodiment will be described with reference to FIG. 5. FIG. 5 is a flow diagram showing a flow of information in the network system. A series of flows of the charging processing of this embodiment shown in FIG. 5 is roughly divided into an information transmission processing stage on the upper section and a charging processing stage on the lower section. Each of the stages will be described.

First, a form of performing communication between the attached terminal T and the communication apparatus C will be described using the upper section of FIG. 5 (information transmission processing stage). The form of performing communication specifically means a form for processing at a stage in which the attached terminal T requests information from the communication apparatus C and the communication apparatus C transmits the requested information to the attached terminal T.

As shown in the upper section of FIG. 5 (information transmission processing stage), in a transmission stage of necessary information, first, the attached terminal T requests the communication apparatus C, via the line L, to establish connection between the communication apparatus C and the attached terminal T via the line L (step S1). Moreover, the attached terminal T requests the communication apparatus C to transmit information necessary after establishing the connection via the line L (step S2).

Then, the service server 12 and the fee calculation server 14 in the communication apparatus C having received the transmission request perform processing such as identification of the user (customer) who owns the attached terminal T which has sent the transmission request and specification of the requested information. At this point, the identification processing is performed by exchange of information between the customer database 15 and the fee calculation server 14. On the other hand, the specifying processing of the requested information is performed by exchange of information between the service database 13 and the service server 12.

Thereafter, the fee calculation server 14 calculates a communication fee according to an amount of executed communication and exchanged information and time required for communication, which is generated when the requested information is sent to the attached terminal T. The communication fee according to an amount of executed communication and exchanged information and time required for communication is hereinafter simply referred to as a communication fee. The calculation server 14 outputs information on the calculated communication fee and the user of the attached terminal T that has performed this communication, to the charging server 16 via the LAN 10 (step S3).

Finally, the service server 12 in the communication apparatus C transmits the necessary information to the attached terminal T via the line L (step S4). Upon recognizing that the transmission has ended, the attached terminal T sends a line disconnection request, which indicates that the currently established connection with the communication apparatus C is cut, to the communication apparatus C via the line L (step S5). In this way, a series of information transmission processing is completed.

Next, a form of charging the communication fee after exchange of information is repeated between the attached terminal T and the communication apparatus C as described in steps S 1 to S5 above will be described with reference to the lower section of FIG. 5 (charging processing stage). This charging processing stage is further divided into a stage of charging processing (steps S6 to S9) and a stage of payment acceptance processing (steps S10 to S13). The stage of charging processing is for charging the communication fee according to steps S 1 to S5 to the seller. And the stage of payment acceptance processing is for receiving payment of a fee from the user of the attached terminal T in the processing apparatus H of the seller.

First, the information transmission processing (steps S 1 to S5) is repeated as described above and, after the elapse of a predetermined period, the charging server 16 performs charging processing for charging the seller a communication fee for the communication (steps S6 to S9). Note that the predetermined period may be a fixed period such as every month or may be varied each time the charging processing is performed. In addition, the charging server 16 may charge the seller a communication fee each time communication is executed rather than after the predetermined period.

The charging database 17 outputs the stored information on the communication fee and information on the user of the attached terminal T which has performed this communication to the charging server 16. Thereafter, the charging server 16 calculates a total amount of communication fees for one user (step S6).

Then, the charging server 16 charges the seller this total amount of communication fees. Information on the calculated total amount of communication fees and information on one user of the attached terminal T, which has performed this communication, are transmitted to the line transmitter / receiver 11 from the charging server 16 of the communication apparatus C via the LAN 10. The information on the calculated total amount of communication fees and the information on one user of the attached terminal T, which has performed this communication, are corresponding to the information on an amount which the seller is charged by above-described the charging processing. These are hereinafter generally referred to communication fee information. This communication fee information is transmitted from the line transmitter / receiver 11 of the communication apparatus C to the line transmitter / receiver 21 of the processing apparatus H via the line L (step S7).

Note that, when the total amount of communication fees which the seller is charged in the charging server 16 of the communication apparatus C in this embodiment is calculated, the communication carrier can also mail a document describing the information on the calculated total amount of communication fees and the information on one user of the attached terminal T, which has performed this communication (communication fee information), to communicate the information to the seller.

Then, in the processing apparatus H, the line transmitter / receiver 21 transmits the communication fee information to the payment acceptance server 22 via the LAN 20. Thereafter, the payment acceptance server 22 sends a signal, which indicates that the communication fee information has been received, to the communication apparatus C (step S8).

The seller who is charged the communication fee from the communication apparatus C pays this communication fee to the communication carrier which owns the communication apparatus C. At this point, the seller may pay the communication fee to the communication apparatus C using electronic money according to an operation in the processing apparatus H. More specifically, the seller operates the payment acceptance server 22 of the processing apparatus H, whereby the processing apparatus H may send a signal, which indicates that electronic money of an amount of the communication fee is to be paid, to the communication apparatus C. In addition, in the case where the payment acceptance server 22 of the processing apparatus H receives the communication fee information, the processing apparatus H may automatically send a signal, which indicates that electronic money is to be paid, to the communication apparatus C. In the case where the electronic money is used in this way, the paid electronic money is, for example, stored in a not-shown account in the charging server 16 of the communication apparatus C.

The communication carrier inputs the information on the paid amount to the charging server 16, or the paid electronic money is stored in the account in the charging server 16, whereby the charging server 16 recognizes that the communication fee has been paid. Then, information that the payment has been accepted is sent to the processing apparatus H from the charging server 16 via the LAN 10, the line transmitter / receiver 11, and the line L (step S9). Note that, after the charging server 16 recognizes the payment of the amount, the communication carrier may mail a document, which describes a notification that the payment has been accepted, to the seller.

On the other hand, in order to cause the user of the attached terminal T to pay a predetermined fee, the payment acceptance processing (steps S10 to S13) is performed in the payment acceptance server 22.

First, the payment acceptance server 22 receives the communication fee information from the line transmitter / receiver 21. Then, the payment acceptance server 22 performs exchange of this communication fee information with the customer database 23. The payment acceptance server 22 collates the communication fee information with information on a fee payment form for the user of the attached terminal T in the customer database 23 described later. And the payment acceptance server 22 calculates an amount conforming to the payment form for the user of the attached terminal T which the user should pay (step S10). In the following description, information on this calculated amount which the user of the attached terminal T is charged is referred to as attached terminal user's share information. Further, the payment acceptance server 22 charges the user of the attached terminal T this amount_which the user should pay. This attached terminal user's share information is transmitted to the line transmitter / receiver 21 from the payment acceptance server 22 via the LAN 20.

Thereafter, the attached terminal user's share information is transmitted to the transmitter / receiver 1 through the antenna AT of the attached terminal T from the line transmitter / receiver 21 of the processing apparatus H via the line L (step S11). The attached terminal user's share information is stored in the memory 7 from the transmitter / receiver 1 via the controller 6. Then, the attached terminal user's share information is displayed on the display 5 as a charged amount according to an operation executed from the operating section 4. Thereafter, the controller 6 sends a signal, which indicates that the attached terminal user's share information has been received, to the communication apparatus C (step S12).

When an amount which the user of the attached terminal T is charged is calculated in the payment acceptance server 22 of the processing apparatus H in this embodiment, the seller can also mail a document describing information on the calculated amount (attached terminal user's share information) to communicate to the user of the attached terminal T.

Then, the user of the attached terminal T pays the charged amount to the seller of the communication type car-navigation apparatus. At this point, the user may pay the user's share to the processing apparatus H using electronic money according to an operation in the attached terminal T. More specifically, the user may operate the operating section 4 of the attached terminal T to thereby send a signal, which indicates that electronic money of an amount of the user's share is to be paid, to the processing apparatus H. Alternatively, upon receiving the attached terminal user's share information, the controller 6 of the attached terminal T may automatically send a signal, indicating that electronic money is to be paid, to the processing apparatus H. In the case where the electronic money is used in this way, the paid electronic money is, for example, stored in a not-shown account in the payment acceptance server 22 of the processing apparatus H.

The seller inputs information on the paid amount to the payment acceptance server 22, or information on the paid electronic money is stored in the account in the payment acceptance server 22, whereby the payment acceptance server 22 recognizes that the terminal apparatus user's share has been paid. Then, information that the payment has been accepted is sent to the attached terminal T from the payment acceptance server 22 via the LAN 20, the line transmitter / receiver 21, and the line L (step S13). Note that, after the payment acceptance server 22 recognizes the payment of the amount, the seller may mail a document describing notification that the payment has been accepted to the user of the attached terminal T.

As described above, a series of flows of the charging processing of this embodiment ends. Among the flows, if the flow of the charging processing stage (steps S6 to S9) progresses in the above-described order and the flow of the payment acceptance stage (steps S10 to S13) also progresses in the above-described order, the other flows in time series are not limited to the order described in the lower section of FIG. 5. For example, the processing of step S10 may be performed immediately after step S7.

Here, information on a fee payment form for the user of the attached terminal T in the customer database 23 will be described. The information on a fee payment form for the user of the attached terminal T in the customer database 23 provided in the processing apparatus H relates to a form of payment of a fee that the user of the attached terminal T pays to the seller.

For example, the information of a form includes (A) a form in which a purchaser does not pay a price of a communication type car-navigation apparatus at the time of purchase of the apparatus and, thereafter, pays a total amount including a part of the price of the apparatus and a communication fee at a time decided in advance, (B) a form in which a purchaser pays a part of a price of a communication type car-navigation apparatus at the time of purchase of the apparatus and, thereafter, pays a total amount including a part of the remainder of the price of the apparatus and a communication fee at a time decided in advance, and (C) a form in which a purchaser pays all of a price of a communication type car-navigation apparatus at the time of purchase of the apparatus and, thereafter, pays a communication fee at a time decided in advance.

Note that the above-described time decided in advance may be, for example, for each unit time or may be a time which a purchaser of a communication type car-navigation apparatus decided arbitrarily. Each purchaser can determine these fee payment forms according to an economical state of the purchaser of the communication type car-navigation apparatus. Therefore, significant financial burden on the purchaser of the communication type car-navigation apparatus at the time of purchase is reduced. Therefore, sale of the communication type car-navigation apparatus is facilitated. Note that, if the purchaser finishes to pay an amount for a price of the communication type car-navigation apparatus, thereafter, the purchaser only has to pay a communication fee.

In addition, payment acceptance server 22 can perform processing for receiving payment of a fixed amount of fee set in advance from a purchaser of the attached terminal T. This fixed amount of fee means that a total amount including a part of a price of the communication type car-navigation apparatus and a part of a communication fee is fixed. In this case, the purchaser and the seller can also set a fixed amount of fee according to the above-described payment forms (A) to (C) in advance. In this case, in whatever way information is exchanged and communication is performed between the attached terminal T and the communication apparatus C, an amount which the seller of the communication type car-navigation apparatus receives from the user of the attached terminal T is fixed, and financial burden on the user of the attached terminal T is reduced. In addition, since the fixed amount is paid to the seller of the communication type car-navigation apparatus in addition to the purchase amount of the terminal apparatus, financial burden on the seller is also reduced.

In this way, an amount which the user of the attached terminal T is caused to pay by the payment acceptance processing of the payment acceptance server 22 may be fixed or may be variable according to a communication fee which the seller of the communication type car-navigation apparatus is charged.

Here, although the calculation device and the charging processing device of the present invention are provided in the fee calculation server 14 and the charging server 16 of the communication apparatus C owned by the communication carrier in this embodiment, the present invention is not limited to this. The calculation device and the charging processing device may be provided in the attached terminal T and the processing apparatus H, respectively.

In addition, although the fee calculation server 14 serving as the calculation device and the charging server 16 serving as the charging processing device are described as separate device in this embodiment, the present invention is not limited to this. The fee calculation server 14 and the charging server 16 may consist of an identical server, which constitutes both the calculation device and the charging processing device.

Further, although the service database 13, the customer database 15, and the charging database 17 are described as being provided in the facility owned by the communication carrier in this embodiment, the present invention is not limited to this. For example, the service database 13, the customer database 15, and the charging database 17 may be located in remote locations as long as they are connected to the service server 12, the fee calculation server 14, and the charging server 16 via a line or the like, respectively, and can show the above-described functions.

In this embodiment, the attached terminal T of the communication type car-navigation apparatus is described as the terminal apparatus of the present invention. However, the terminal apparatus of the present invention may be a portable type wireless telephone, a personal computer, or the like.

The line connecting the respective components of the network system in the present invention includes both of a wired line as shown in FIG. 1 and a wireless line, for example, in the case where a terminal apparatus is a portable type wireless telephone, an attached terminal of a communication type car-navigation apparatus, or the like.

As describe above, according to charging system in network system N in accordance with the first embodiment, the charging system for charging a fee generated by communication in a network system N comprising a communication apparatus C owned by communication carrier, an attached terminal T of a communication type car-navigation apparatus which performs communication via the communication apparatus C, and a processing apparatus H belonging to a seller which has sold the communication type car-navigation apparatus, the charging system comprising: fee calculation server 14 which calculates the fee, and charging processing server 16 which performs processing for charging the calculated fee to the seller which has sold the communication type car-navigation apparatus.

Thus, the seller of the communication type car-navigation. apparatus is charged all the communication fees. Therefore, procedural burden on the communication carrier, which charges users of respective attached terminal T fees, is reduced. And procedural burden on the user of the attached terminal T who pays communication fees is reduced.

In the charging system, the processing apparatus H comprises payment acceptance server 22 which performs processing for accepting payment of a fixed amount of fee set in advance from a purchaser of the communication type car-navigation apparatus.

The communication apparatus C owned by communication carrier included in the charging system comprising the above-described fee calculation server 14 and the above-described charging server 16.

Thus, the seller of the communication type car-navigation apparatus is charged all the communication fees. Therefore, procedural burden on the communication carrier, which charges users of respective attached terminal T fees, is reduced. And procedural burden on the user of the attached terminal T who pays communication fees is reduced.

The processing apparatus H owned by the communication type car-navigation apparatus included in the charging system comprises payment acceptance server 22 which performs processing for accepting payment of a fixed, amount of fee set in advance from a purchaser of said terminal apparatus.

### (II) Second embodiment

In a second embodiment of the present invention, the controller 6 of the attached terminal T in the charging system of the first embodiment further has a function of a restriction processing section serving as a restricting device which restricts generation of a communication fee. Thus, in the case where information identical with already acquired information is transmitted to the attached terminal T again, waste of charging a communication fee for the duplicated information is prevented. Further, this controller 6 serving as a restriction processing section constitutes a first comparing device, a first prohibiting device, a second comparing device, and a second prohibiting device of the present invention. And the controller 6 prevents already acquired information from being transmitted to the attached terminal T again. In addition, the service server 12 of the communication apparatus C in this embodiment constitutes an expiration date information adding device and a regional information adding device of the present invention. The service server 12 provides expiration date information and regional information which become references of comparison by the comparing device. The structure and the operations of the processing apparatus H belonging to the seller of the car-navigation apparatus in the first embodiment and that in the second embodiment are the same.

An embodiment in the case where the user of the attached terminal T wishes to acquire information will be described in detail. The information changes as time elapses or a region changes, such as weather information, map information, or traffic state information. Such information is referred to as information "a". Described below are the case in which exchange of the information "a" is restricted with time as a reference and the case in which exchange of the information "a" is restricted with a region as a reference. Thus this embodiment prevents the waste of charging a communication fee duplicately for information that is the same as already acquired information.

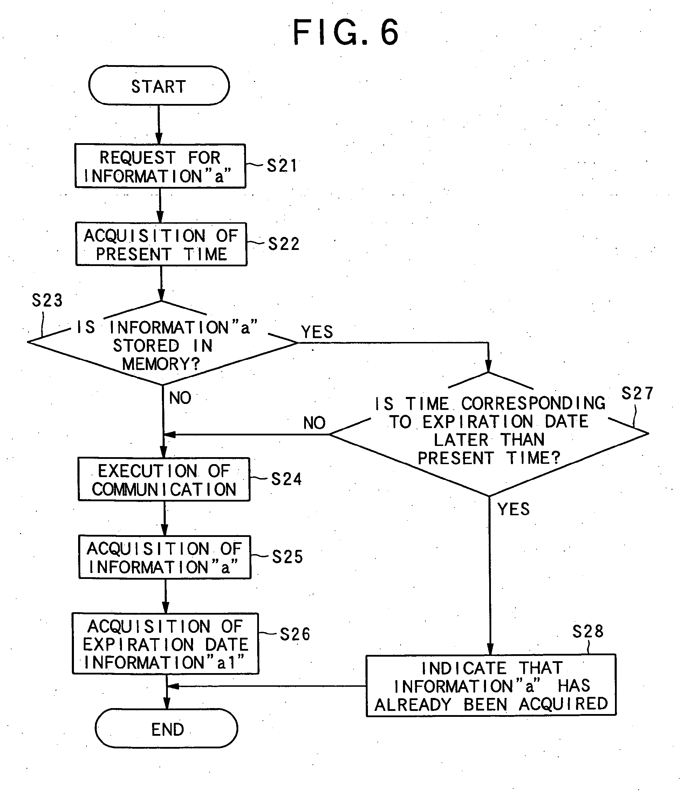

First, the case in which exchange of the information "a" is restricted with time as a reference will be described with reference to FIG. 6. FIG. 6 is a flow diagram explaining a flow in the case where the information "a" is restricted with time as a reference.

As shown in FIG. 6, in information transmission processing of the second embodiment, according to an operation of a user, the attached terminal T receives the information "a" through steps S1 to S5 in FIG. 5 as described above, whereby the information "a" is stored in the memory 7. Simultaneously with this, the terminal apparatus T also receives expiration date information (referred to as added information " a1 " ) indicating the expiration date of the information "a" sent from the service database 13 of the communication apparatus C. And the added information "a1" is stored in the memory 7.

Thereafter, when the user of the attached terminal T wishes to acquire the information "a" again, the user operates the operating section 4. Then, a signal indicating that the user of the attached terminal T wishes to acquire the information "a" is sent to the controller 6 from the operating section 4 of the terminal apparatus T (step S21). At this point, the controller 6 acquires a present time from the memory 7 and, at the same time, judges whether or not the information "a" is stored in the memory 7 (steps S22 and S23). In the case of this embodiment, since the information "a" is stored in the memory 7, the controller 6 judges that the information "a" has already been stored in the memory 7 (step S23: Yes).

Subsequently, the controller 6 judges whether or not the added information "a1" is stored in the memory 7. In the case of this embodiment, since the added information "a1" is stored in the memory 7, the controller 6 judges that the added information "a1" has already been stored in the memory 7.

Subsequently, the controller 6 compares time corresponding to the expiration date according to the added information "a1" and the present time (step S27). When the time corresponding to the expiration date is later than the present time (step S27: Yes), since the updated latest information "a" has already been acquired, the controller 6 prohibits execution of communication. And the controller 6 sends a signal to the display 5 such that the display 5 displays an indication that the information "a" has already been acquired and the information "a" has not been changed. When the indication is displayed on the display 5 (step S28), the user of the attached terminal T can see that the information "a" has already been acquired. The user can read out the information "a" from the memory 7 by operating the operating section 4 separately.

On the other hand, when the time corresponding to the expiration date is earlier than the present time (step S27: No), the controller 6 exchanges information as explained in steps S1 to S5 (steps S24 and S25) via the transmitter / receiver 1 and the antenna AT in order to acquire the updated latest information "a". Simultaneously with this, the controller 6 receives the expiration date information (added information "a1" ) in the same manner as described above, and the added information "a1" is stored in the memory 7 (step S26). In this way, a series of flows shown in FIG. 6 ends.

In the case where the updated latest information "a" is acquired in the terminal apparatus T as described above, a communication fee for the exchange of information is calculated by steps S1 to S5 in FIG. 5. The seller of the communication type car-navigation apparatus is charged this communication fee for the latest information "a" in the charging processing stage of steps S6 to S9 together with the communication fee calculated for the information "a" acquired before.

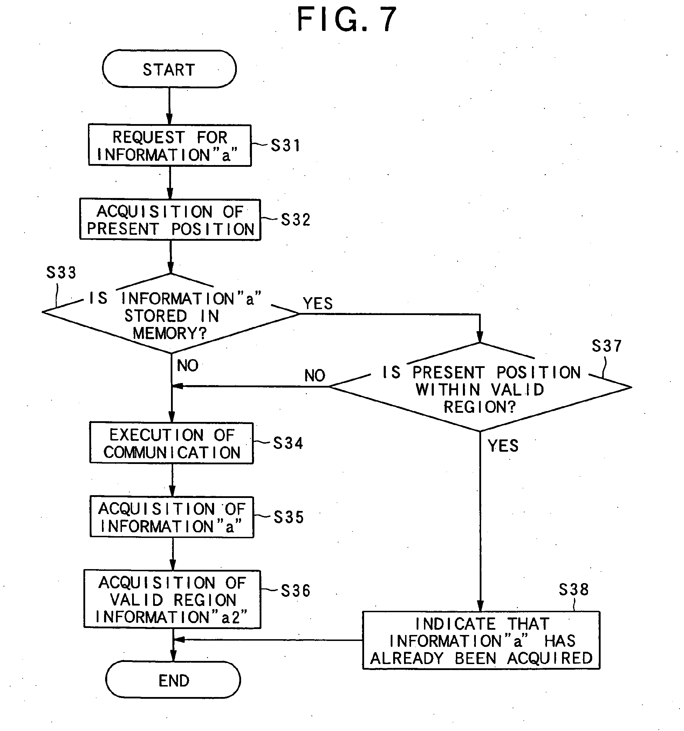

Next, a form in the case where exchange of the information "a" is restricted with a region as a reference will be described with reference to FIG. 7. FIG. 7 is a flow diagram explaining a flow in the case where exchange of information is restricted with a region as a reference.

As shown in FIG. 7, in other information transmission processing of the second embodiment, the attached terminal T receives the information "a" through steps S1 to S5 in FIG. 5 described above. And the attached terminal T receives the information "a" according to an operation of the user, whereby the information "a" is stored in the memory 7. Simultaneously with this, the terminal apparatus T also receives valid region information (referred to as added information "a2" ) indicating a valid region of the information "a" transmitted from the service database 13 of the communication apparatus C. And the added information "a2" is stored in the memory 7.

Thereafter, when the user of the attached terminal T wishes to acquire the information "a" again, the user operates the operating section 4. Then, a signal indicating that the user wishes to acquire the information "a" through communication is sent to the controller 6 from the operating section 4 of the terminal apparatus T (step S31). At that point, the controller 6 acquires present position information from a main body of the communication type car-navigation apparatus connected with the attached terminal T. At the same time, the controller 6 judges whether or not the information "a" is stored in the memory 7 (steps S32 and S33). In the case of this embodiment, since the information "a" is stored in the memory 7, the controller 6 judges that the information "a" has already been stored in the memory 7 (step S33: Yes).

Subsequently, the controller 6 judges whether or not the added information "a2" is stored in the memory 7. In the case of this embodiment, since the added information "a2" is stored in the memory 7, the controller 6 judges that the added information "a2" has already been stored in the memory 7.

Subsequently, the controller 6 compares the valid region according to the added information "a2" and the present position (step S37). When the present position is within the valid region (step S37: Yes), since the updated latest information "a" has already been acquired, the controller 6 prohibits execution of communication. At the same time, the controller 6 sends a signal to the display 5 such that the display 5 displays an indication that the information "a" has already been acquired and the information "a" has not been changed. When the indication is displayed on the display 5 (step S38), the user of the attached terminal T can see that the information "a" has already been acquired. The user can read out the information "a" from the memory 7 by operating the operating section 4 separately.

On the other hand, when the present position is outside the valid region (step S37: No), the controller 6 exchanges information as explained in steps S1 to S5 (steps S34 and S35) via the transmitter / receiver 1 and the antenna AT in order to acquire the updated latest information "a". Simultaneously with this, the controller 6 receives the valid region information (added information "a2" ) in the same manner as described above, and the added information "a2" is stored in the memory 7 (step S36). In this way, a series of flows shown in FIG. 7 ends.

In the case where the updated latest information "a" is acquired in the terminal apparatus T as described above, a communication fee for the exchange of information is calculated by steps S1 to S5 in FIG. 5. The seller of the communication type car-navigation apparatus is charged this communication fee for the latest information "a" in the charging processing stage of steps S6 to S9 together with the communication fee calculated for the information "a" acquired before.

Next, the case in which exchange of information to be updated at each fixed period is restricted in acquiring the information will be described. This restriction is for restricting communication by acquiring added information on an each period for update and an update date and time together with the information to be updated at each fixed period and prohibiting communication while the information to be updated is not updated.

More specifically, for example, according to the operation of the user, the attached terminal T receives information to be updated through steps S 1 to S5 described above, whereby the information to be updated is stored in the memory 7. Simultaneously with this, the terminal apparatus T also receives added information on the each period for update and the time for update for the information to be updated. And the added information on the each period for update and the time for update is stored in the memory 7.

Thereafter, when the user of the attached terminal T wishes to acquire the information to be updated, the user operates the operating section 4. Then, a signal indicating that the user wishes to acquire the information to be updated through communication is sent to the controller 6 from the operating section 4. At that point, the controller 6 acquires information on a present time from the memory 7. At the same time, the controller 6 judges whether or not the information to be updated is stored in the memory 7. In the case of this embodiment, since the information to be updated is stored in the memory 7, the controller 6 judges that the information to be updated has already been stored in the memory 7.

Subsequently, the controller 6 judges whether or not the added information on the each period for update and the time for update is stored in the memory 7. In the case of this embodiment, since the added information on the each period for update and the update date and time is stored in the memory 7, the controller 6 judges that the added information on the each period for update and the update date and time has already been stored in the memory 7.

Subsequently, the controller 6 compares the next time for update and the present time based upon the added information on the each period for update and the time for update. Next, when the next time for update is later than the present time, since the latest information to be updated has already been acquired, the controller 6 prohibits execution of communication. At the same time, the controller 6 sends a signal to the display 5 such that the display 5 displays an indication that the information to be updated has already been acquired and the information to be updated has not been changed. When the indication is displayed on the display 5, the user of the attached terminal T can see that the information to be updated has already been acquired. The user can read out the information to be updated from the memory 7 by operating the operating section 4 separately.

On the other hand, when the next time for update is earlier than the present time, the controller 6 exchanges information as explained in steps S 1 to S5. via the transmitter / receiver 1 and the antenna AT in order to acquire the latest information to be updated.

In addition, the controller 6 adds the period for update to the next time for update based upon the added information on the each period for update and the time for update. Thereby the controller 6 sequentially calculates the next planned update time. Then, in the case where a signal for trying to acquire information to be updated at the time when the information is not updated is sent from the operating section 4, the controller 6 prohibits communication as described above.

In this way, in the case where information to be updated at each fixed time is acquired in the terminal apparatus T, a communication fee for exchange of the information is calculated by steps S1 to S5 in FIG. 5 each time the information is acquired. The seller of the communication type car-navigation apparatus is charged the communication fee for the information to be updated at each fixed time calculated in this way in the charging processing stage of steps S6 to S9 together with the communication fee calculated for the information acquired before.

The restriction processing for prohibiting information from being transmitted to the attached terminal T described above, which is performed by the controller 6, is processing for, in the case where certain information has already been acquired in the memory 7, prohibiting the same information from being transmitted to the attached terminal T again.

Next, the case in which communication is prohibited unless a predetermined time has elapsed after one communication and the case where communication is prohibited unless the attached terminal T has moved a predetermined distance after one communication will be described.

First, restriction processing for prohibiting communication unless a predetermined time has elapsed after one communication will be described. For example, in the case where the predetermined time is set to five minutes uniformly, unless five minutes or more have elapsed after one communication, even if an operation signal indicating that the user wishes to perform communication is sent to the controller 6 by the operating section 4, the controller 6 prohibits the communication from being performed according to its own judgment.

Note that the above-described predetermined time may not be uniform. And the predetermined time is not specifically limited. The predetermined time may be determined for each of various kinds of information, for example, weather information, traffic information, and the like. In addition, the user of the attached terminal T may personally set the predetermined time, or the communication carrier or the seller of the communication type car-navigation apparatus may set the predetermined time.

Next, the restriction processing for prohibiting communication unless the attached terminal T has moved a predetermined distance after one communication will be described. For example, in the case where the predetermined distance is set to 5 km uniformly, unless the attached terminal T has moved 5 km or more after one communication, even if an operation signal indicating that the user wishes to perform communication is sent to the controller 6 by the operating section 4, the controller 6 prohibits the communication from being performed according to its own judgment.

Note that the above-described predetermined distance may not be uniform. And the predetermined distance is not specifically limited. The predetermined distance may be determined for each of various kinds of information, for example, map information, traffic information, and the like. In addition, the user of the attached terminal T may personally set the predetermined distance, or the communication carrier or the seller of the communication type car-navigation apparatus may set the predetermined distance.

In this way, the controller 6 serving as the restriction processing section of the attached terminal T prohibits communication itself (steps S1 to S5) of the attached terminal T according to the above-described restriction forms. In summary, the controller 6 restricts generation of a communication fee based upon conditions set in advance such as a condition for prohibiting information identical with already acquired information from being transmitted to the attached terminal T again, a condition for prohibiting communication unless predetermined time has elapsed after one communication, and a condition for prohibiting communication unless the attached terminal T has moved a predetermined distance after one communication. Although various kinds of restriction processing in the controller 6 have been described, the restriction processing is not limited to the above-described processing, and generation of a communication fee may be restricted based upon other conditions.

Although communication is restricted in the controller 6 in this embodiment described above, the present invention is not limited to this. And communication may be restricted in other apparatuses, components, or the like.

In addition, in this embodiment, the service server 12 of the communication apparatus C in this embodiment includes <1> the expiration date information adding device of the present invention which adds expiration date information, which indicates the expiration date of the information "a" to be transmitted (added information " a1 " ), to the information "a" and transmits the information to the attached terminal T, and <2> the regional information adding device of the present invention which adds regional information, which indicates a valid region of the information "a" to be transmitted (added information "a2" ), to the information "a" and transmits the information to the attached terminal T. However, the present invention is not limited to this. The respective device may be provided in other apparatuses or components, for example, an information transmission apparatus or the like described later.

As described above, in according to charging system in network system N in accordance with the second embodiment, in the above described first embodiment, controller 6 in attached terminal of a communication type car-navigation apparatus further comprises restriction processing section which restricts generation of the fee based upon conditions set in advance.

Thus, generation of a fee due to communication is controlled based upon conditions set in advance. Therefore, financial burden on the seller of the terminal apparatus is reduced.

Moreover, in this embodiment, in the above-described charging system, in a case where the communication apparatus C and the attached terminal T perform the communication for transmission of information, and the controller 6 serving as a restriction processing section prohibits transmitting information identical with the information being transmitted to the attached terminal T.

Thus, information identical with already acquired information is prohibited from being transmitted again. Therefore, generation of waste can be restricted and, as a result, burden of a communication fee on the seller can be reduced surely.

In this embodiment, in the above-described charging system, the service server 12 of the communication apparatus C serving as an expiration date information adding device is provided with a function for adding the expiration date information "a1" , which indicates the expiration date of the information "a" to be transmitted, to the information "a" and transmitting the information to the attached terminal T. In addition, the controller 6 serving as a restriction processing section serving as a first comparing device and a first prohibiting device is provided with a function for comparing the expiration date indicated by the transmitted expiration date information "a1" and a present time and a function for, when time corresponding to the expiration date is later than the present time, prohibiting execution of communication.

Thus, when information within the expiration date has already been transmitted to the attached terminal T, information same as this information is prohibited from being sent to the attached terminal T. Therefore, communication can be restricted effectively and, as a result, burden of fee on the seller can be surely reduced.

In this embodiment, like in the above-described charging system, the service server 12 of the communication apparatus C serving as a regional information adding device is provided with a function for adding the regional information "a2" , which indicates a valid region of the information "a" to be transmitted, to the information "a" and transmitting the information to the attached terminal T. In addition, the controller 6 serving as a restriction processing section serving as a second comparing device and a second prohibiting device is provided with a function for comparing the valid region indicated by the transmitted regional information "a2" and a present position of the added terminal T and a function for, when the present position is within the valid region, prohibiting execution of communication.

Thus, when the present position of the attached terminal T is within the valid region of the information which has already been transmitted to the attached terminal T, information same as this information is prohibited from being sent to the attached terminal T. Therefore, communication can be restricted effectively and, as a result, burden of fee on the seller can be surely reduced.

Note that, in this embodiment, as described in the first embodiment, in the charging system, the processing apparatus H is provided with the payment acceptance server 22 for performing processing for receiving payment of a fixed amount of fee which is set by the purchaser of the communication type car-navigation apparatus in advance.

Thus, the seller can acquire the fixed amount of fee and, at the same time, useless communication of exchanging information identical with already acquired information is prohibited. Therefore, financial burden on the seller who is charged a communication fee is reduced.

### (III) Third embodiment

A third embodiment of the present invention is, in the charging system of the first embodiment or the charging system of the second embodiment, that the service server 12 of the communication apparatus C is further provided with a function of a relay transmission section serving as a relay transmission device which transmits information, which is sent from a plurality of information transmission apparatuses owned by the communication carrier or other companies, to the attached terminal T of the communication type car-navigation apparatus. The structures and the operations of the attached terminal T and the processing apparatus H in the first and second embodiments and that in the third embodiment are the same.

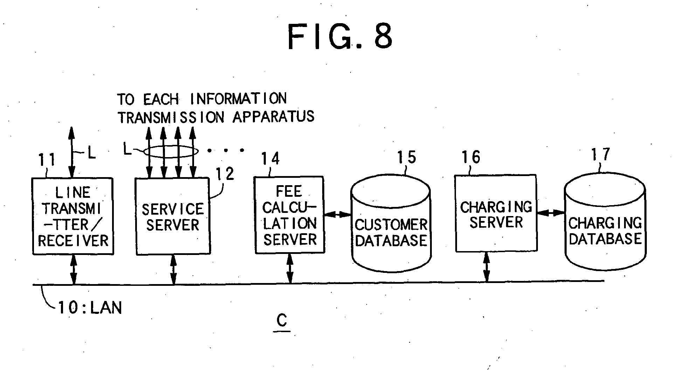

The third embodiment in accordance with the present invention will be described with reference to FIG. 8. Note that FIG. 8 is a block diagram showing a detailed structure of a communication apparatus serving as a component constituting a network system in accordance with the third embodiment.

As shown in FIG. 8, the communication apparatus C of the third embodiment is installed in a facility owned by a communication carrier. More specifically, the communication apparatus C includes the line transmitter / receiver 11 connected to the line L, the service server 12, the fee calculation server 14 serving as a calculation device, the customer database 15, the charging server 16 serving as a charging processing device, the charging database 17, and the LAN 10. In addition, the data server 12 of the communication apparatus C is connected to plurality of information transmission apparatuses via the line L regardless of whether the line L is wired or wireless.

In the third embodiment, the relation between the service server 12 and the service database 13 in the communication apparatus C of the first embodiment is changed to a relation between the service server 12 of the communication apparatus C and the plurality of information transmission apparatuses. A relay transmission section in the service server 12 of the communication apparatus C transmits information sent from the plurality of information transmission apparatuses to the attached terminal T. That is, in the third embodiment, the service database 13 in the first embodiment is placed as an information transmission apparatus in the premises of another information provider or the like rather than in the premises of the communication carrier or the like which is the owner of the communication apparatus C.

Next, operations will be described.

The information transmission apparatus stores various kinds of information to be supplied to the attached terminal T. The information transmission apparatus outputs information according to a request sent from the service server 12 via the line L to the service server 12.

Then, the service server 12 executes communication with the attached terminal T to exchange information while acquiring necessary information required by the attached terminal T from the information transmission apparatus. Moreover, the service server 12 transmits information on an amount of the communication executed and the information exchanged between the service server 12 and the attached terminal T as described above, time required for the communication, a user ID of the attached terminal T which has performed such communication, and the like to the fee calculation server 14 via the LAN 10.

Other operations in the communication apparatus C are the same as those in the first embodiment.

In this embodiment, the service database 13 is not limited to one in its number, and the plurality of information transmission apparatuses and the service server 12 are connected. Therefore, various kinds of information are provided from databases owned by various information transmission apparatuses to the attached terminal T. This is convenient for the user of the attached terminal T.

As described above, according to charging system in network system N in accordance with the third embodiment, communication apparatus C owned by communication carrier further comprises service server 12 serving as relay transmission section which transmits the information, which is sent from one and more of information transmission apparatuses, to said terminal apparatus.

Thus, the user of the terminal apparatus can acquire various kinds of information. This is convenient for the user of the terminal apparatus.

Moreover, it is also possible to record a program corresponding to the flow diagram shown in FIG. 5 in a data-recording medium such as a flexible disk or a hard disk, or acquire the program via a network such as the Internet, and read out and execute the program with a microcomputer or the like, thereby causing the microcomputer to function as the fee calculation server 14 and the charging server 16 in accordance with the respective embodiments.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A charging system for charging a fee generated by communication in a network system (N) comprising a communication apparatus (C), a terminal apparatus (T) which performs communication via the communication apparatus (C), and a seller's apparatus (H) belonging to a seller which has sold the terminal apparatus (T), said charging system **characterized by**:
a calculation device (14) which calculates the fee, and
a charging processing device (16) which performs processing for charging the seller the calculated fee.

2. The charging system according to claim 1, further comprising a restricting device (6) which restricts generation of the fee based upon conditions set in advance.

3. The charging system according to claim 2, in a case where said communication apparatus (C) and said terminal apparatus (T) perform the communication for transmission of information, and
wherein said restricting device (6) prohibits transmitting information identical with the information being transmitted to said terminal apparatus (T).

4. The charging system according to claim 3, further comprising an expiration date information adding device (12) which adds expiration data information, which indicates an expiration date of the information to be transmitted, to the information and transmits the information with expiration data information to said terminal apparatus (T),
wherein said restricting device (6) comprises:
a first comparing device (6) which compares the expiration date indicated by the transmitted expiration date information and a present time; and
a first prohibiting device (6) which prohibits execution of the communication when time corresponding to the expiration date is later than the present time.

5. The charging system according to claims 3 and 4, further comprising a regional information adding device (12) which adds regional information, which indicates a valid region of the information to be transmitted, to the information and transmits the information with regional information to said terminal apparatus,
wherein said restricting device (6) comprises:
a second comparing device (6) which compares a valid region indicated by the transmitted regional information and a present position of said terminal apparatus; and
a second prohibiting device (6) which prohibits execution of the communication when the present position is within the valid region.

6. The charging system according to claims 1 to 4,
wherein said seller's apparatus (H) comprises a payment acceptance device (22) which performs processing for accepting payment of a fixed amount of fee set in advance from a purchaser of said terminal apparatus (T).

7. The charging system according to claims 3 and 4,
wherein said communication apparatus (C) further comprises a relay transmission device (12) which transmits the information, which is sent from one and more of information transmission apparatuses, to said terminal apparatus (T).

8. The charging system according to claim 1, wherein at least one of said communication apparatus (C), said terminal apparatus (T), and said seller's apparatus (H) provide at least one of said calculation device (14) and said charging device (16).

9. A communication apparatus (C) included in a charging system for charging a fee generated by communication in a network system (N) comprising the communication apparatus (C), a terminal apparatus (T) which performs communication via the communication apparatus (C), and a seller's apparatus (H) belonging to a seller which has sold the terminal apparatus (T), said communication apparatus (C) **characterized by**:
a calculation device (14) which calculates the fee, and
a charging processing device (16) which performs processing for charging the seller the calculated fee.

10. A terminal apparatus (T) included in a charging system for charging a fee generated by communication in a network system (N) comprising a communication apparatus (C), the terminal apparatus (T) which performs communication via the communication apparatus (C), and a seller's apparatus (H) belonging to a seller which has sold the terminal apparatus (T), said terminal apparatus (T) **characterized by** a restricting device (6) which restricts generation of the fee based upon conditions set in advance.

11. A seller's apparatus (H) included in a charging system for charging a fee generated by communication in a network system (N) comprising a communication apparatus (C), a terminal apparatus (T) which performs communication via the communication apparatus (C), and the seller's apparatus (H) belonging to a seller which has sold the terminal apparatus (T), said seller's apparatus (H) **characterized by** a payment acceptance device (22) which performs processing for accepting payment of a fixed amount of fee set in advance from a purchaser of said terminal apparatus.

12. A charging method for charging a fee generated by communication in a network system (N) comprising a communication apparatus (C), a terminal apparatus (T) which performs communication via the communication apparatus (C), and a seller's apparatus (H) belonging to a seller which has sold the terminal apparatus (T), said charging method **characterized by**:
a calculation process which calculates the fee; and
a charging processing process which performs processing for charging the seller the calculated fee.

13. A data-recording medium **characterized in that** said data-recording medium readable by a computer and on which a charging control program that causes the computer, the computer included in a charging system for charging a fee generated by communication in a network system (N) comprising a communication apparatus (C), a terminal apparatus (T) which performs communication via the communication apparatus (C), and a seller's apparatus (H) belonging to a seller which has sold the terminal apparatus (T), said charging control program causing the computer to function as:
a calculation device (14) which calculates the fee; and
a charging processing device (16) which performs processing for charging the seller the calculated fee.
